# EUROPÄISCHE PATENTANMELDUNG

(11) **EP 3 311 996 A2**
(43) Veröffentlichungstag der Anmeldung: **25.04.2018**
(21) Anmeldenummer: 17193558.8
(22) Anmeldetag: 27.09.2017
(51) Int. Cl.: B30B 9/30, A01F 15/14, B63B 21/08, B65B 27/12

(54) **BLOCKIERVORRICHTUNG UND DAMIT AUSGESTATTETE KASTEN-BALLENPRESSE**

(30) Priorität: 30.09.2016 DE 202016105444 U
(71) Anmelder: Schwelling, Hermann, 88682 Salem (DE)
(72) Erfinder: Schwelling, Hermann, 88682 Salem (DE)
(74) Vertreter: Weickmann & Weickmann PartmbB

(57) **Zusammenfassung**

Um von den zwei gegeneinander zu ziehenden Endbereichen (100a, b) eines als Umreifungsmaterial zu verwendenden Zugelementes (100) eines davon festzulegen und nur das andere zu dem festgelegten Endbereich (100 b) hinziehen zu müssen, wird erfindungsgemäß eine entsprechende Blockiervorrichtung vorgeschlagen, die an jeder Umreifungsebene auf der Außenseite der Seitenwand eines Presskanals einer Kasten-Ballenpresse aufgebracht und verwendet werden kann.

## Beschreibung

### I. Anwendungsgebiet

Mittels Ballenpressen wird loses Material wie Kartonagen, flachgedrückte PET-Flaschen, aber auch Kabelreste und Ähnliches zu kompakten Ballen verdichtet, indem eine Pressplatte das lose Material in einen Presskanal hinein gegen eine feststehende Gegenplatte schiebt und vor jedem erneuten Hub loses Material zwischen der Pressplatte und dem entstehenden Ballen nachgefüllt wird.

### II. Technischer Hintergrund

Die entstehenden Ballen müssen in aller Regel mit einem Umreifungsmaterial umreift werden, um zu verhindern, dass dieser Ballen bei der weiteren Handhabung wie Transportieren und Lagern nicht auseinanderbricht. Die Umreifung geschieht mit einem Zugelement wie Draht oder Kunststoffband, wobei die Umreifungsebene, in der eine Umreifung liegt, in aller Regel die Press-Richtung mit beinhaltet oder parallel zu dieser liegt.

Im Rahmen der vorliegenden Anmeldung wird generell von Draht als Zugelement zum Umreifen gesprochen, ohne die Erfindung dadurch auf dieses spezielle Zugelement oder Umreifungsmaterial zu beschränken.

In aller Regel werden die Ballen nicht nur einfach, sondern mit mehreren Umreifung in mehreren Umreifungsebenen beabstandet nebeneinander hergestellt.

Bei den Ballenpressen sind zwei grundsätzliche Bauformen zu unterscheiden, die sich auch hinsichtlich der Erzeugung der Umreifung unterscheiden:
Bei sogenannten Kanal-Ballenpressen ist der Presskanal an dem der verfahrbaren Pressplatte gegenüberliegenden Ende im Wesentlichen offen und lediglich am offenen Ende ein ausreichend großer Widerstand die notwendige Gegenkraft zum Zusammenpressen des Ballens durch die Pressplatte aufbringt, die etwa in einer Verengung des Presskanals oder einer ausreichenden Länge des Presskanals und der dadurch entstehenden Reibung zur Wand der entstehenden Ballen besteht.

Bei den sogenannten Kasten-Ballenpressen wird ebenfalls mittels einer Pressplatte das lose Material in einen Presskanal hinein verdichtet, dessen der Eintauchseite der Pressplatte gegenüberliegende Stirnseite während des Pressvorganges jedoch von einer Gegenplatte im Wesentlichen verschlossen ist. Die Gegenplatte kann geöffnet werden, ist also meist eine Tür oder eine Klappe, die im offenen Zustand diese Stirnseite des Presskanals vollständig freigibt.

Bei diesen Kasten-Ballenpressen ist die in Press-Richtung gemessene Länge des fertiggestellten Ballens relativ genau bekannt. Deshalb werden zum Umreifen hier auf Länge vorkonfektionierte Zugelemente, also beispielsweise auf Länge geschnittene Drahtstücke, als Umreifungsmaterial benutzt, die in ihren Endbereichen bereits entsprechend ausgebildet sind, um die Endbereiche auf einfache Art und Weise gegeneinander fixieren zu können.

Eine typische Ausstattung in den Endbereichen hierfür sind beispielsweise sogenannte Quicklinkösen, die manuell oder auch automatisch ineinander gehängt werden können.

Dabei ist es ferner bekannt, dass nach Fertigstellung des Ballens in der gewünschten Länge die Umreifung begonnen wird, wenn sich die Pressplatte in der vorgeschobenen Position, also der Press-Position, mit Druck an der Stirnseite des Ballens anliegend, befindet und in dieser Position natürlich angehalten wird:
Dann wird von einer Ausgangs-Seite des Presskanals aus ein solcher Draht von einer Seite des Presskanals aus durch die Wand des Presskanals bzw. zwischen stirnseitigem Ende der Wand und der z.B. Pressplatte hindurch geschoben an der Stirnseite des Ballens entlang, wofür in der Vorderseite der Pressplatte in der Regel jeweils eine entsprechende Nut vorhanden ist.

Dieses durchgeschobene Ende des Drahtes wird auf der gegenüberliegenden Seite in Pressrichtung entlang des Presskanals horizontal nach zur anderen, insbesondere der vorderen, Stirnseite geschoben und dort wiederum zwischen dem dortigen, insbesondere vorderen, Ende der dortigen Seitenwand und der z.B. Gegen-Platte eingeführt und horizontal zurück bis auf die Ausgangsseite geführt.

Dadurch stehen auf der Ausgangsseite die beiden Enden des Drahtes vor, die für die Umreifung gegeneinander fixiert werden müssen.

Damit der herumgelegte Draht in Pressrichtung verlaufend direkt an dem Ballen anliegen kann, sind horizontal in Press Richtung verlaufende Schlitze an der Position der vorgesehenen Umreifung und damit anschließend an die Nuten in Pressplatte und Gegen-Platte angeordnet.

Um die Umreifung herstellen zu können, ohne dass der Draht im Umreifungszustand allzu lose ist, müssen von dem auf der Ausgangsseite stehenden Bediener die beiden Enden des Drahtes vor seiner Brust gegeneinander gezogen und die Enden miteinander verbunden werden, also vorzugsweise die dort angeordneten Quicklink-Ösen ineinander gehängt werden.

Dies wird in der Regel mit mehreren Umreifungen parallel beabstandet übereinander vollzogen.

Bei dem beschriebenen Beispiel lag die Press-Richtung horizontal, und die Umreifungsebene ebenfalls.

Bei einer horizontalen Press-Richtung kann jedoch die Umreifungsebene auch vertikal stehen, oder die Press-Richtung kann vertikal stehen, und dann stehen auch die Umreifungsebenen vertikal.

Nachdem alle Umreifungsdrähte wie beschrieben durchgefädelt und deren Enden gegeneinander befestigt sind, wird einerseits der Pressstempel zurückgefahren. Durch das Wegnehmen der Presskraft dehnt sich der Ballen entgegen der Press-Richtung aus und setzt die Umreifung dadurch unter Spannung, die somit eng an dem Ballen anliegt.

Den gleichen Effekt bewirkt das Öffnen bzw. Entfernen der Gegen-Platte zum Freigeben der dortigen Stirnfläche, sodass das Umreifungsmaterial, etwa die Drähte, nun mit Vorspannung am Ballen anliegen, woraufhin der Ballen aus der Kasten-Ballenpresse entfernt werden kann, indem er beispielsweise mithilfe der Pressplatte aus der gegenüberliegenden, nun offenen Stirnseite des Presskanals heraus geschoben werden kann.

Das Problem besteht darin, dass - je nach Länge des hergestellten Ballens, der Biegefähigkeit des Drahtes und anderer Faktoren - die beiden Enden eines durch gefädelten Drahtes mit erheblicher Kraft gegeneinander gezogen werden müssen, was der an der Ausgangsseite stehende Bediener durchführt, indem er mit jeder Hand ein Ende hält und die beiden Hände und damit Drahtenden mit den dortigen Quicklinkösen vor seiner Brust gegeneinander bewegen muss, was eine sehr ungünstige Bewegungsrichtung ist.

### III. Darstellung der Erfindung

### a) Technische Aufgabe

Es ist daher die Aufgabe gemäß der Erfindung, eine Blockier-Vorrichtung sowie eine damit ausgestattete Kasten-Ballenpresse zu schaffen, mittels der das Umreifen für den Bediener einfacher und weniger anstrengend vonstattengeht, weshalb die Erfindung vorzugsweise auch ein Verfahren zur Durchführung des Umreifens umfasst.

### b) Lösung der Aufgabe

Diese Aufgabe wird durch die Merkmale der Ansprüche **1, 9** und **15** gelöst. Vorteilhafte Ausführungsformen ergeben sich aus den Unteransprüchen.

Hinsichtlich der Kasten-Ballenpresse weist die gattungsgemäße Bauform einen von, in der Regel vier, Kanalwänden umgebenen Presskanal sowie eine zu öffnende Gegenplatte an der einen Stirnseite und einen in die andere Stirnseite des Presskanals einfahrbare und darin verfahrbare Pressplatte auf.

Für das Umreifen der Ballen sind in zwei einander gegenüberliegenden Kanalwänden, meist in den Seitenwänden, fluchtend zueinander in Pressrichtung verlaufende Schlitze angeordnet, die sich über die gesamte Länge dieser Kanalwände erstrecken, um das Umreifungsmaterial, meist ein Zugelement wie etwa ein Draht, um den in dem Presskasten befindlichen Ballen nach dessen Fertigstellung herumführen zu können.

Erfindungsgemäß ist an der Außenseite einer dieser beiden Seitenwände an wenigstens einem der Schlitze, vorzugsweise an allen diesen Schlitzen, eine in einer Richtung wirkende Blockiervorrichtung für das Zugelement so angeordnet, dass jeweils eines ihrer beiden Klemmelemente, insbesondere Klemmzylinder, nach fertiger Montage sich einander gegenüberliegend bezüglich des Schlitzes befindet.

Die Blockiervorrichtung ist dabei vorzugsweise - quer zur Pressrichtung und mit Blick auf den jeweiligen Schlitz in der Wand betrachtet - von der zu öffnenden Gegenplatte um mindestens **50**%, besser mindestens **60**%, besser mindestens **70**% der Länge der Presskammer entfernt angeordnet.

Die Ausbildung und Anordnung der Blockiervorrichtung ist dabei dergestalt, dass die Blockierrichtung, also insbesondere diejenige Erstreckungsrichtung des Zugelementes, in die das Zugelement auf Grund der Blockiervorrichtung nicht mehr bewegt werden kann, die Gegenrichtung zur Pressrichtung ist.

Ferner besitzen die Schlitze eine Breite, die größer ist als die Quererstreckung des in die Blockiervorrichtung einzulegenden Umreifungsmaterials, insbesondere Zugelementes, betrachtet in Seitenansicht, also mit Blick von außen auf den jeweiligen Schlitz.

Die - zumindest nach erfolgter Montage der Blockiervorrichtungen an der Kasten-Ballenpresse - getrennten Basen bzw. Basisplatten jedes Klemmelementes der Blockiervorrichtung befinden sich auf gegenüberliegenden Seiten des Schlitzes, und der Abstand zwischen den beiden Basisplatten fluchtet dann mit der Breite des Schlitzes und ist insbesondere gleich groß.

Vorzugsweise sind bei mehreren parallel zueinander in einer Seitenwand vorhandenen Schlitzen und Blockiervorrichtungen die Blockiervorrichtungen, insbesondere alle, auf der gleichen Längsposition in Pressrichtung angeordnet.

Hinsichtlich der Vorgehensweise stimmt die erfindungsgemäße Vorgehensweise mit der bisher bekannten Vorgehensweise in mehreren Schritten überein:
a) bekannt ist, dass zunächst nach Fertigstellung des Ballens die Pressplatte innerhalb des Presskanals in Pressstellung belassen wird,
b) das zum Umreifen verwendete Zugelement, insbesondere der Draht, von einer Ausgangsseite in der ersten Querrichtung, also entlang der Frontseite der Pressplatte, meist in einer dort vorhandenen Nut, quer durch den Beginn des Presskanals hindurch geschoben wird und von dort entlang des dort beginnenden Schlitzes in der gegenüberliegenden Seitenwand nach vorne, also vom Pressstempel weg. Das so eingeschobene freie Ende des Zugelementes, insbesondere des Drahtes, wird dann wiederum entlang der zum Ballen hinweisenden Kontaktfläche der Gegen-platte wieder quer über den Kanalquerschnitt zurück auf die Ausgangsseite, die Bedienerseite, geschoben, vorzugsweise wieder entlang in Kontaktfläche der der Gegenplatte zu diesem Zweck vorhandene Nuten, sodass auf der Ausgangsseite, also der Bedienerseite, die beiden freien Enden des Zugelementes mit ihren daran ausgebildeten Befestigungsvorrichtungen, wie etwa Quick-Link-Ösen, aus dem gleichen Schlitz in dieser Seitenwand vorstehen.
c) Erfindungsgemäß wird nun - abweichend von der bekannten Vorgehensweise - einer der beiden Endbereiche des Zugelementes mit einer vom freien Ende gegenüber der endseitigen Befestigungsvorrichtung des Zugelementes zurückversetzten Stelle in eine der Blockiervorrichtungen so eingelegt, dass man das Zugelement entlang seiner Erstreckungsrichtung zwar in Richtung der der Blockiervorrichtung benachbarten Befestigungsvorrichtung des Zugelementes, also einer Freilaufrichtung, aus der Blockiervorrichtung ziehen kann, aber das Zugelement nicht in der umgekehrten Richtung, der Blockierrichtung, gezogen werden kann, sondern durch die Blockiervorrichtung blockiert ist, also sich die benachbarte Befestigungsvorrichtung des Zugelementes nicht der Blockiervorrichtung nähern kann.
d) Nunmehr wird, wie bekannt, das andere Ende des Zugelementes mit der dort angeordneten anderen Befestigungsvorrichtung ergriffen und in Richtung der zuvor erwähnten ersten Befestigungsvorrichtung bewegt und durch Verbinden der beiden Befestigungsvorrichtungen die Umreifung geschlossen, wobei erfindungsgemäß jedoch nur dieser zweite, nicht in der Blockiervorrichtung fixierte Endbereich des Zugelementes ergriffen und - auch mit beiden Händen und in beliebiger Körperhaltung und Körperstellung - in Richtung der ersten Befestigungsvorrichtung gezogen werden kann.
e) Anschließend wird- wie bekannt - der Pressdruck auf den Ballen verringert oder gar beendet, entweder durch Öffnen der Gegenplatte und/oder durch Zurückfahren der Pressplatte, wobei beides gleichzeitig oder auch zeitlich zueinander versetzt geschehen kann, zumindest aber die Gegen-platte irgendwann geöffnet werden muss.
f) Sobald der Ballen in Pressrichtung nicht mehr von der Presskraft belastet wird, dehnt er sich in und entgegen der Pressrichtung aus, wodurch die geschlossenen Umreifungen in Erstreckungsrichtung des Zugelementes unter Zugspannung gesetzt werden. Durch diese Straffung werden
   - entweder die in die Blockiervorrichtungen eingelegten Abschnitte des Zugelementes quer zu dessen Erstreckungsrichtung jeweils in Richtung Längsmitte des Ballens mit Kraft beaufschlagt und der Draht in dieser ersten Querrichtung, der Entnahmerichtung, aus der jeweiligen Blockiervorrichtung heraus ins Innere des Kanals gezogen,
   - und/oder beim Ausschieben des Ballens in Pressrichtung aus dem Presskanal die seitlichen, in Pressrichtung verlaufenden, Abschnitte des Zugelementes der Umreifung in Freilaufrichtung aus der Blockier-vorrichtung hinausgeschoben.
   Dadurch befindet sich nunmehr die komplette Umreifung meist innerhalb des Querschnittes des Presskanales, und nicht mehr teilweise in den Schlitzen, sodass anschließend der fertig hergestellte und umreifte Ballen aus der Presskammer entnommen werden kann, sei es durch Vorwärtsschieben mittels der Pressplatte in Richtung gegenüberliegende Öffnung des Presskanals oder auf andere Weise.

Dabei erfolgt das Einlegen des einen Bereiches des Zugelementes, insbesondere des einen Endbereiches, in die Blockiervorrichtung vorzugsweise dadurch, dass bei zwei gegeneinander wirkenden Klemmelementen ein bewegliches Klemmelement in die Offenstellung bewegt wird und das Zugelement, insbesondere der Draht, dazwischen eingelegt wird und nach Loslassen des beweglichen Klemmelementes dadurch in Blockierrichtung zwischen den Klemmelementen fixiert ist.

Hinsichtlich der Blockiervorrichtung wird die Aufgabe gelöst, indem die Blockiervorrichtung so ausgelegt ist, dass ein in die Blockiervorrichtung eingelegtes Objekt, insbesondere ein längliches Objekt wie ein Zugelement, insbesondere ein Draht, durch die Blockiervorrichtung in einer Richtung, der Blockierrichtung, blockiert wird, also am Weiterbewegen in diese Blockierrichtung gehindert wird.

Vorzugsweise soll aber das Zugelement in mindestens einer ersten Querrichtung zu dieser Blockierrichtung, der Entnahmerichtung, in der Blockiervorrichtung beweglich sein, und insbesondere aus der Blockiervorrichtung in dieser ersten Querrichtung entnehmbar ist, und zwar ohne an der Blockiervorrichtung direkt tätig werden zu müssen, also ohne die Blockiervorrichtung aktiv umzuschalten, entsperren oder ähnliches zu müssen. Allein durch das Bewegen des Zugelementes in dieser ersten Querrichtung, der Entnahmerichtung, soll das Entnehmen möglich sein, wobei während des Entnahmevorganges die Blockierung in Blockierrichtung aufrechterhalten bleiben soll.

Die Blockiervorrichtung soll ferner so ausgelegt sein, dass vorzugsweise das in die Blockiervorrichtung eingelegte Zugelement in der Gegenrichtung zur Blockierrichtung, der Freilaufrichtung, durchaus bewegbar sein soll.

Wenn man diese Blockiervorrichtung an einer Umreifungsvorrichtung für die Ballen einer Ballenpresse, insbesondere einer Kasten-Ballenpresse benutzt, so kann während der Herstellung der Umreifung der eine Endbereich des Drahtes oder des anderen länglichen Zugelementes in Blockierrichtung verlaufend in die Blockiervorrichtung eingelegt werden, und dadurch in der Blockierrichtung blockiert und gehalten werden, in die Gegenrichtung dagegen jederzeit bewegt werden und auch in die erste Querrichtung, die Entnahmerichtung, in die mindestens eine Beweglichkeit des Drahtes möglich sein soll, insbesondere zum Entnehmen aus der Blockiervorrichtung.

Dies ist von Vorteil, da hierdurch in Verlaufsrichtung des um den Ballen herum gelegten, bereits auf Länge geschnittenen und mit z.B. Befestigungsösen versehenen Zugelementes damit das eine Ende des Zugelementes in Verlaufsrichtung fixiert ist, und der Bediener lediglich das andere Ende des um den Ballen gelegten Zugelementes in Richtung des blockierten anderen Endes ziehen und durch Einhängen der z.B. Befestigungsösen gegeneinander die Umreifung herstellen muss.

Der Bediener kann deshalb das lose Ende mit beiden Händen ergreifen, und sich insbesondere so stellen, dass er eine optimale, hohe Zugkraft aufbringen kann, und er muss insbesondere nicht vor seinem Körper oder insbesondere vor seiner Brust die beiden Enden mit je einer Hand haltend gegeneinander bewegen, wobei man nur relativ geringe Zugkräfte auf die beiden Enden aufbringen kann.

Der weitere Vorteil besteht darin, dass beim Wegnehmen der Presskraft auf den Ballen die geschlossenen Umreifungen unter Spannung gesetzt werden und dadurch der Teil des Zugelementes, der sich in der Blockiervorrichtung befindet, in Querrichtung zur Blockierrichtung kraftbeaufschlagt wird und dadurch allein durch die Spannungserhöhung in Umreifungsrichtung das Zugelement selbsttätig wieder aus der Blockiervorrichtung herausbewegt wird und den Kontakt mit dieser verliert, ohne dass hier der Bediener die einzelnen Blockiervorrichtungen - bei mehrfacher Umreifung ist für jede Umreifung eine Blockiervorrichtung notwendig - in irgendeiner Weise betätigen muss.

Natürlich muss zu diesem Zweck die Blockiervorrichtung so montiert werden, dass die gewünschte Entnahmerichtung mit derjenigen ersten Querrichtung der Blockiervorrichtung übereinstimmt, in der das Objekt nicht in der Blockiervorrichtung fixiert ist.

Vorzugsweise ist die Blockiervorrichtung eine Klemmvorrichtung und weist zwei Klemmelemente auf, die eine Klemmkraft jeweils in Richtung des anderen Klemmelementes ausüben und damit auch auf ein dazwischen eingelegtes Zugelement. Es handelt sich dann in aller Regel um eine kraftschlüssige Klemmvorrichtung, und keine formschlüssige Klemmvorrichtung, denn das eingelegte Zugelement besitzt - zumindest in Blockierrichtung und in die Gegenrichtung, die Freilaufrichtung, - eine glatte, ebene Außenfläche.

Vorzugsweise ist die Klemmvorrichtung so ausgebildet, dass der Abstand zwischen den beiden Klemmelementen variabel ist, insbesondere indem die gegen das andere Klemmelement gerichtete Klemmfläche des einen Klemmelementes unbeweglich ist, also in ihrer Lage fixiert ist, aber die Klemmfläche wenigstens des anderen Klemmelementes verlagerbar in Richtung der anderen Klemmfläche sowie in die Gegenrichtung ist, insbesondere verschwenkbar ist.

Vorzugsweise ist dabei das Klemmelement mit der beweglichen Klemmfläche oder die Klemmvorrichtung insgesamt selbsthemmend ausgebildet, sodass allein durch das Einlegen des Zugelementes und den Versuch, es in Blockierrichtung zu bewegen, eine zunehmende Klemmung zwischen den Klemmelementen auftritt.

Dann ist sogar auf ein aktives Vorspannen, also eine Vorspannkraft auf die Klemmelemente in Richtung des jeweils anderen Klemmelementes bei mindestens einem der Klemmelemente vorzusehen, nicht notwendig, also beispielsweise keine vorspannende Feder notwendig, was die Lebensdauer erhöht und die Funktion sicherer macht.

Vorzugsweise sind die Klemmelemente mit einer konvex bogenförmigen Klemmfläche ausgestattet, oder wenigstens eines der Klemmelemente, und das schwenkbare Klemmelement ist um eine Schwenkachse verschwenkbar, die parallel zu einer der Richtungen der Klemmfläche liegt, bei einer um eine Achse gekrümmten Klemmfläche insbesondere parallel, aber versetzt, zur Krümmungsachse dieser Klemmfläche.

In einer bevorzugten da einfach und kostengünstig herzustellenden Lösung sind die Klemmelemente Klemmzylinder, oder wenigstens eines der Klemmelemente ist ein Klemmzylinder, und der verschwenkbare Klemmzylinder ist um eine Schwenkachse schwenkbar, die exzentrisch zur Zylinderachse dieses Klemmzylinders liegt.

Vorzugsweise besitzt die Blockiervorrichtung auch ein Anschlagelement, welches vorzugsweise in der Gegenrichtung zur ersten Querrichtung, in der keine Blockierung erfolgt, insbesondere in der Gegenrichtung zur Entnahmerichtung, als Anschlag dient, um ein Herausbewegen des Zugelementes aus der Klemmvorrichtung in Gegenrichtung zur gewünschten Entnahmerichtung zu vermeiden.

Das Anschlagelement ist vorzugsweise eine Anschlagplatte, die an einem der Klemmelemente, insbesondere an einem der Klemmzylinder und hier vorzugsweise dem feststehenden Klemmzylinder, stirnseitig befestigt ist. Zumindest wenn kein Zugelement in die Blockiervorrichtung oder Klemmvorrichtung eingelegt ist, vorzugsweise aber auch dann, erstreckt sich das Anschlagelement in Blockierrichtung betrachtet über den Abstand zwischen den beiden Klemmelementen hinweg, und zwar ohne oder in einem so geringen Abstand zu den beiden Stirnflächen der Klemmelemente, dass dazwischen ein Hindurchführen des Zugelementes nicht möglich ist.

Vorzugsweise verläuft das Anschlagelement, insbesondere die Anschlagplatte, in der zweiten Querrichtung, die lotrecht auf der Blockierrichtung sowie der ersten Querrichtung steht.

Zu dem Abstand zwischen den beiden Klemmflächen ist klarzustellen, dass im unbeladenen Zustand, wenn sich also kein Zugelement zwischen den Klemmelementen befindet, die beiden Klemmflächen auch ohne Abstand aneinander anliegen können, was davon abhängt, welchen Bewegungsbereich aufeinander zu diese Klemmelemente besitzen, also ob sie mittels eines aktiven Vorspannelementes wie etwa einer Feder vorgespannt sind oder durch entsprechende Einbaulage zumindest das bewegliche Klemmelement schwerkraftbedingt sich in Richtung festes Klemmelement bewegt.

Wird ein längliches Zugelement wie etwa ein Draht eingelegt, so ist sichergestellt, dass er nur in der gewünschten Entnahmerichtung - oder natürlich entgegen der Blockierrichtung, was jedoch in aller Regel nicht gewünscht wird - auf einfache Art und Weise aus der Blockiervorrichtung entnehmbar ist und keine Gefahr besteht, dass der Draht entgegen der Entnahmerichtung aus der Blockiervorrichtung gelangt.

Die Blockiervorrichtung umfasst vorzugsweise eine Basis, insbesondere eine Basisplatte, auf der die Klemmelemente befestigt sind.

Im Montagezustand, also wenn die Blockiervorrichtung bzw. Klemmvorrichtung an einem Bauteil der Umgebung befestigt wird, sind die beiden Klemmelemente auf einer gemeinsamen Basis, insbesondere Basisplatte, befestigt, die jedoch so ausgebildet ist, dass nach der Fixieren der Basisplatte an dem Bauteil der Umgebung diese Basis oder Basisplatte für den Benutzungszustand der Blockiervorrichtung zwischen den beiden Klemmelementen durchtrennt werden kann, sodass zwei getrennte Basisplatten entstehen, auf denen sich jeweils eines der beiden Klemmelemente befindet. Vor allem, wenn die ursprünglich einstückige Basisplatte einen zwischen den beiden darauf montierten Klemmelementen hindurch verlaufenden Schlitz aufweist, sodass die beiden dadurch entstehenden Teile der Basisplatte nur noch durch je einen Steg vor jedem Ende des Schlitzes miteinander verbunden sind, kann diese Trennung durch einfaches Abtrennen oder Entfernen der Stege erreicht werden.

Auf diese Art und Weise kann die Montage der Blockiervorrichtung sehr erleichtert werden, wenn zunächst die Basisplatte so an einem Bauteil der Umgebung befestigt wird, dass jedes seiner beiden Teile, also beidseits der später durchgeführten Trennlinie, an dem Bauteil der Umgebung fixiert, meist verschraubt, wird, denn dann behalten die beiden Klemmelemente auch nach der Durchtrennung der Basisplatte den richtigen, vorbestimmten Abstand zueinander bei.

Durch den danach entstehenden Schlitz zwischen den beiden Basisplatten kann anschließend der Draht aus der Blockiervorrichtung wieder entfernt werden, da sich dieser Schlitz parallel zur Verlaufsrichtung des in die Blockiervorrichtung eingelegten Zugelementes befindet, und zwar von einem in die Blockiervorrichtung eingelegten Zugelement aus in Entnahmerichtung beabstandet.

Wenn die Klemmelemente oder wenigstens eines davon ein Klemmzylinder ist, verläuft die Schwenkachse des schwenkbaren Klemmzylinders, vorzugsweise lotrecht zur sie tragenden Basisplatten und/oder parallel versetzt zur Zylinderachse.

Um keine unterschiedlichen Klemmelemente, insbesondere unterschiedliche Klemmzylinder, herstellen zu müssen, weist jeder Klemmzylinder bezüglich seiner Zylinderachse oder Mittelachse einander gegenüberliegend, aber parallel dazu verlaufend, axiale Durchgangsbohrungen auf, die insbesondere den gleichen Durchmesser besitzen.

Dadurch kann der fest montierte Klemmzylinder an der Basis oder Basisplatte befestigt werden, indem sich je ein durch die Durchgangsbohrungen hindurch passender Fixierstift, insbesondere eine Schraube, durch je eine der Durchgangsbohrungen hindurch erstreckt und mit einem Ende in der Basis befestigt, insbesondere verschraubt oder verschweißt, ist, sowie einen verdickten Kopf besitzt, der einen größeren Durchmesser besitzt als die Durchgangsbohrung.

Der bewegliche, insbesondere schwenkbare, Klemmzylinder wird schwenkbar an der Basis oder Basisplatte befestigt, indem sich durch nur eine der Durchgangsbohrungen ebenfalls ein Fixierstift, hindurch erstreckt, der gegenüber der Basis der Basisplatte fixiert, insbesondere verschweißt oder verschraubt ist.

Dabei ist in diesem Fall jedoch vorzugsweise ein radiales Spiel zwischen dem Außenumfang des Fixierstiftes und dem Innenumfang der Durchgangsbohrung vorhanden, sodass sich dieser verschwenkbare Klemmzylinder um diesen versetzt bezüglich der Zylinderachse positionierten Fixierstift schwenken oder gar drehen kann, wobei im Fall der Möglichkeit des vollständigen Drehens um **360°** der zwischen den beiden Klemmelementen, insbesondere Klemmzylindern je nach Drehlage des schwenkbaren Klemmzylinders minimale Spalt zwischen den Klemmzylindern geringer ist als die kleinste Erstreckung des einzulegenden Zugelementes, insbesondere als die Dicke bzw. der Durchmesser eines zwischen den Klemmzylindern in eine Richtung lotrecht zu der Schwenkachse des beweglichen Klemmzylinders verlaufenden Drahtes.

Vorzugsweise lässt sich der schwenkbare Klemmzylinder jedoch nicht vollständig um **360°** drehen, sondern liegt in einer bestimmten Drehstellung kontaktierend an der Außenfläche, der Klemmfläche, des anderen, fest montierten, Klemmzylinders an, wenn sich kein Zugelement dazwischen befindet.

Vorzugsweise ist die Blockiervorrichtung an dem Bauteil der Umgebung so montiert, dass die Schwenkachse des schwenkbaren Klemmelements, insbesondere Klemmzylinders, nicht mit der Vertikalen übereinstimmt, sondern sich die Klemmfläche des beweglichen, insbesondere schwenkbaren, Klemmelementes schwerkraftbedingt in Richtung der Klemmfläche des anderen Klemmelementes bewegt.

Zu diesem Zweck ist insbesondere die Schwenkachse, insbesondere auch die Mittelachse, des schwenkbaren Klemmelementes oberhalb der Mittelachse des fixierten Klemmelementes, insbesondere Klemmzylinders, angeordnet.

Vorzugsweise ist die Blockiervorrichtung auch so montiert, dass die Schwenkachse des schwenkbaren Klemmelementes oberhalb, insbesondere über, der Zylinderachse des nicht beweglichen Klemmzylinders angeordnet ist.

### c) Ausführungsbeispiele

Ausführungsformen gemäß der Erfindung sind im Folgenden beispielhaft näher beschrieben. Es zeigen:
- **Figur 1a:**: den Presskanal einer Kasten-Ballenpresse in perspektivischer Ansicht,
- **Figur 1b:**: die an der Außenseite einer Seitenwand angeordnete Blockiervorrichtung in vergrößerter Detaildarstellung,
- **Figur 2a:**: die Darstellung der gemäß Figur 1a, jedoch mit in den einzelnen Blockiervorrichtungen eingelegtem Umreifungsmaterial in Form eines Drahtes,
- **Figur 2b:**: die Darstellung gemäß Figur 1b mit einem Stück als Umreifungsmaterial eingesetztem Zugelement in der vergrößerten Blockiervorrichtung,
- **Figur 3a:**: den Presskanal, betrachtet in Pressrichtung mit darin befindlicher Pressplatte,

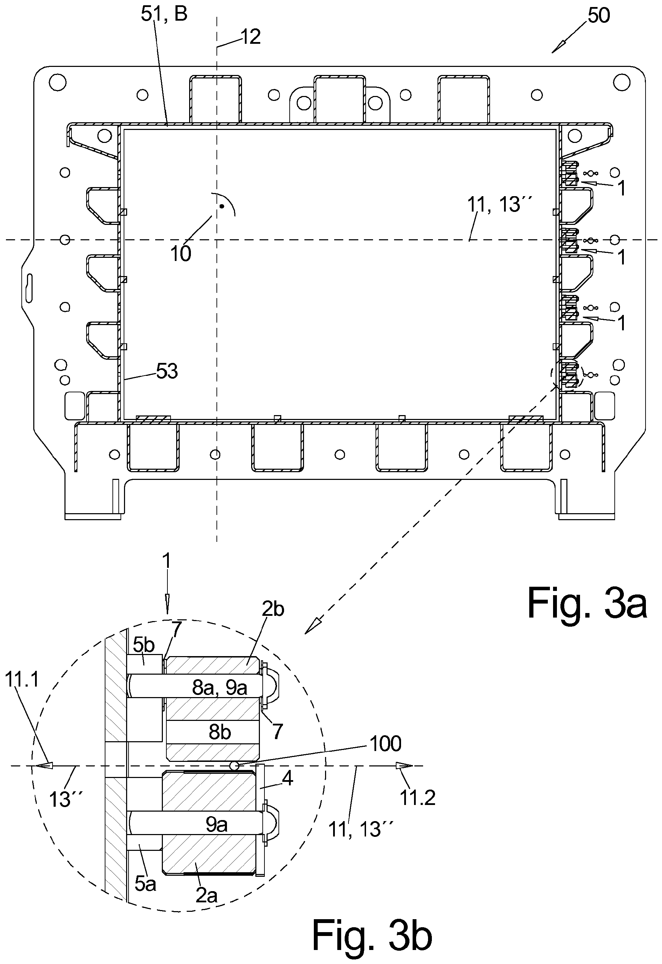

- **Figur 3a:**: eine Detailvergrößerung aus Figur 3a,

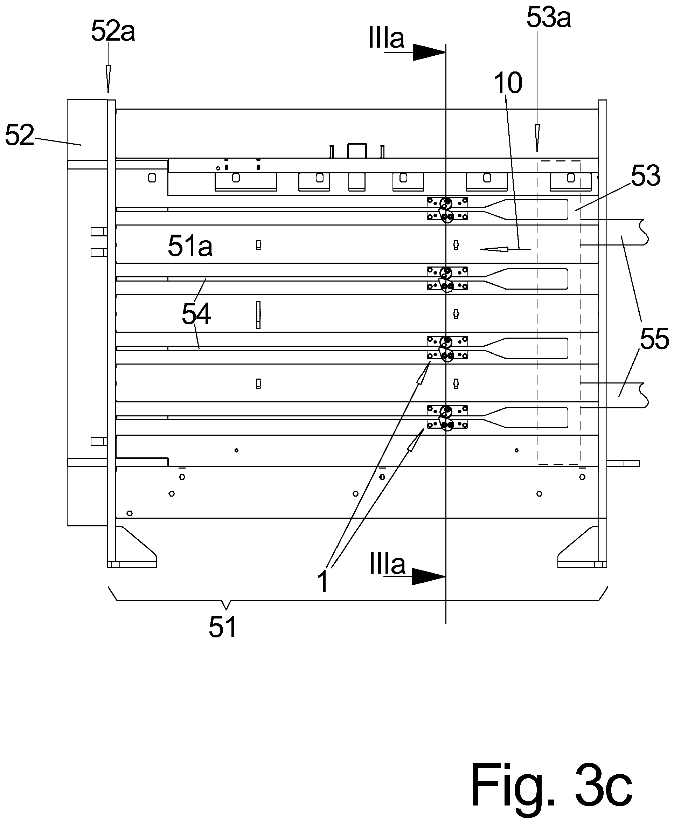

- **Figur 3c:**: eine Seitenansicht der Kasten-Presse von der Seite mit den daran befestigten Blockiervorrichtungen,

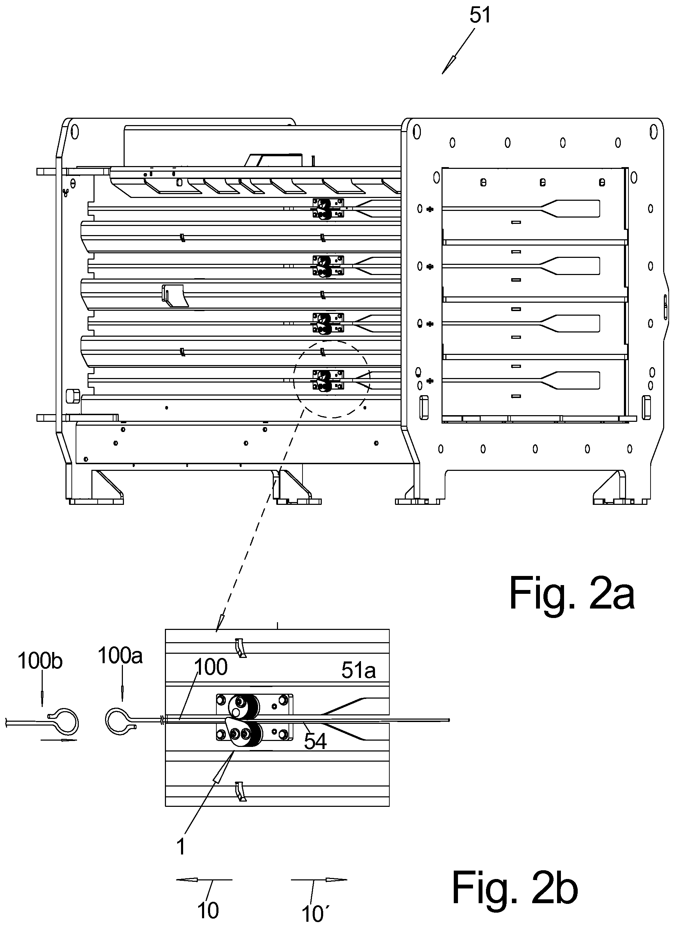

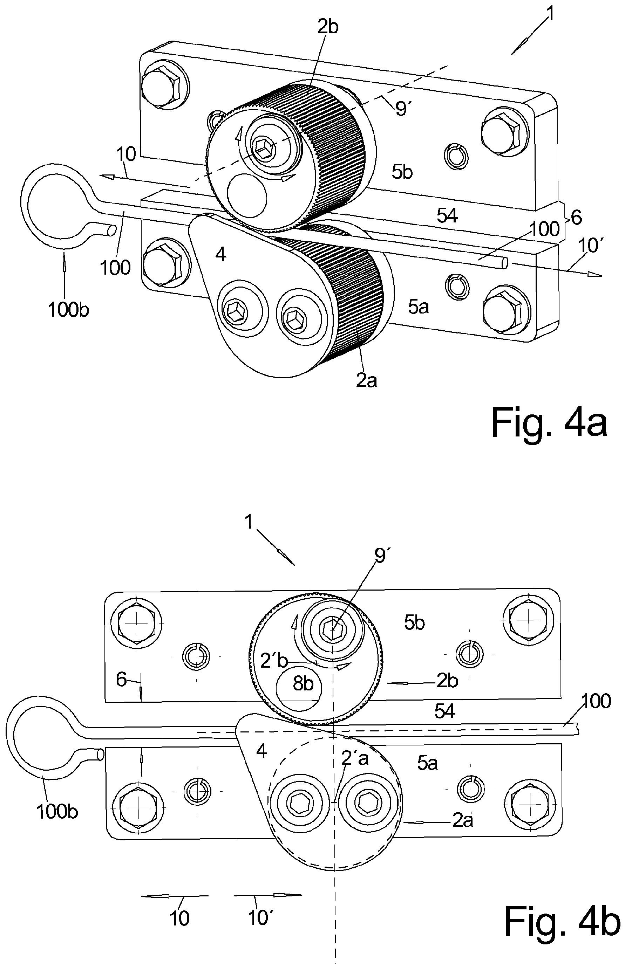

- **Figur 4a:**: eine Blockiervorrichtung in perspektivischer Ansicht mit darin eingelegtem, zu blockierendem Zugelement in Blickrichtung der Figur 2b, jedoch ohne dahinterliegende Kanal-Wand und in weiterer Vergrößerung,

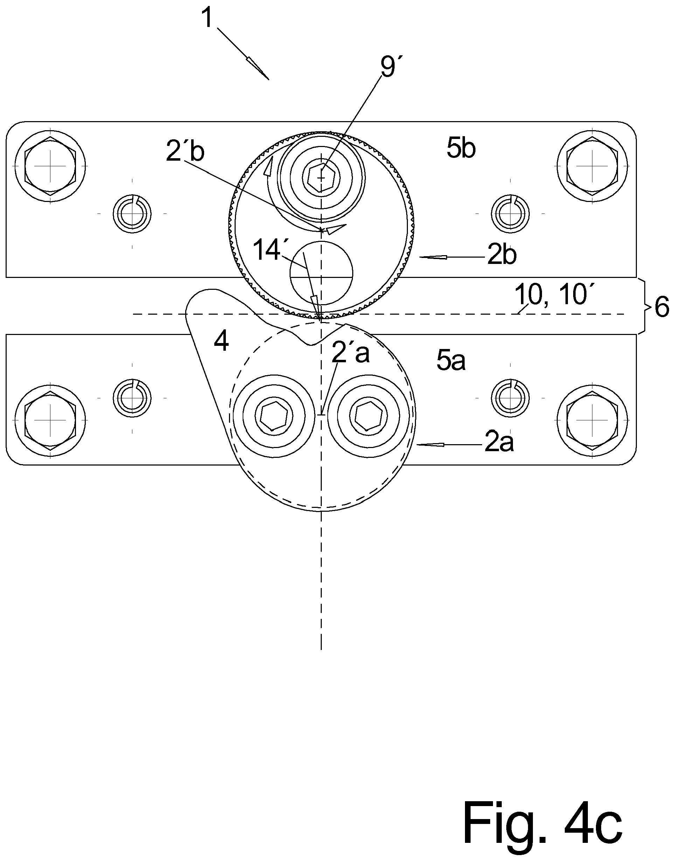

- **Figur 4b:**: die Situation gemäß Figur **4**a, betrachtet in Aufsicht auf die Blockiervorrichtung,
- **Figur 4c:**: eine teilgeschnittene Aufsicht auf die Blockiervorrichtung in Blickrichtung der Figur **2**b ohne darin eingelegtem Zugelement,

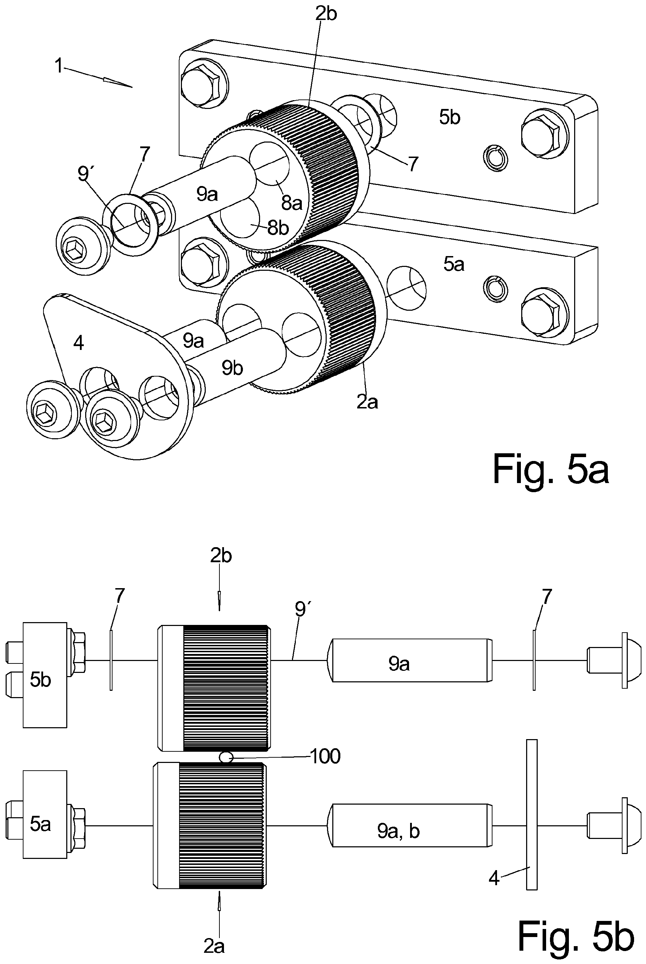

- **Fig. 5a, b:**: die Blockiervorrichtung in Explosionsdarstellung in perspektivischer Ansicht sowie in Verlaufsrichtung des dazwischen zu blockierenden Zugelementes.

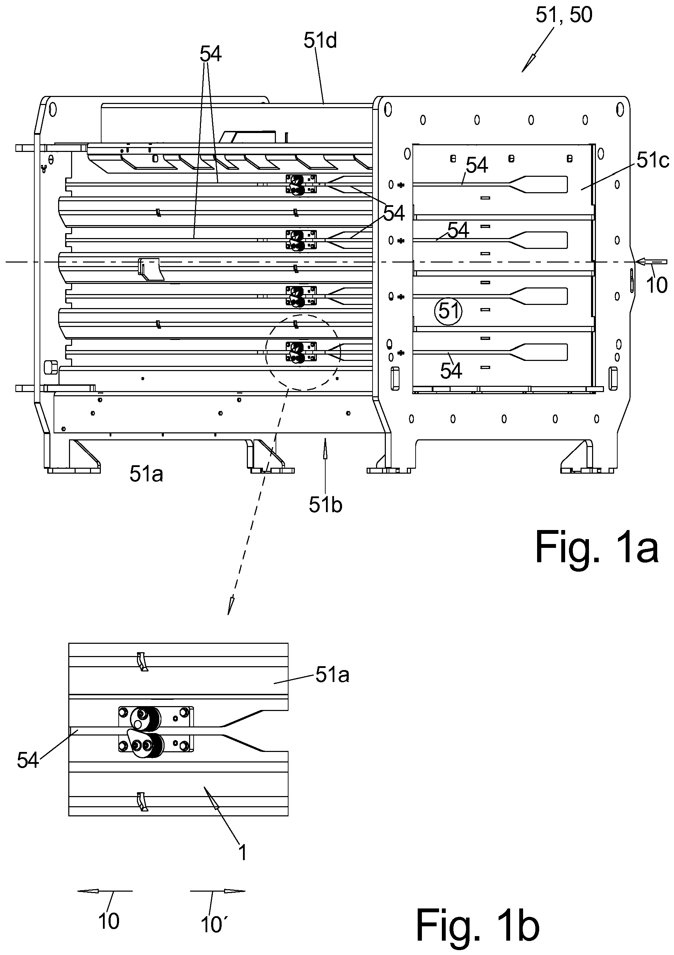

Figur **1**a zeigt den Presskanal **51** einer Kasten-Ballenpresse **50** in perspektivischer Ansicht, also teilweise mit Blick in die eine offene Stirnseite des hier horizontal verlaufenden Presskanals **51,** der einen rechteckigen Querschnitt besitzt und von vier Kanal-Wänden **51**a **-** d, die in Umfangsrichtung aneinander anschließen, begrenzt wird, nämlich den beiden einander gegenüberliegenden Seitenwänden **51**a und **51**c, der oberen, horizontal liegenden Seitenwand **51**d und der unteren ebenfalls horizontal liegenden Seitenwand **1**b.

Der Presskanal **51** besitzt in seiner Verlaufsrichtung einen gleichbleibenden Querschnitt und offene Stirnflächen.

Bei einer solchen Kasten-Ballenpresse ist die hintere, in den Figuren **1**a und **3**c linke, Stirnfläche durch eine die Stirnfläche verschließende bewegliche Gegenplatte **52** verschließbar, die zum Freigeben dieses endseitigen Querschnittes des Presskanals **51** aufgeschwenkt, aufgefahren oder anderweitig entfernt werden kann, während das gegenüberliegende, vordere Ende des Presskanals im Wesentlichen verschlossen wird durch eine im Presskanal **51** quer zur Erstreckungsrichtung des Presskanals stehende Pressplatte **53,** die den freien inneren Querschnitt des Presskanals **51** im Wesentlichen ausfüllt, wie in Figur **3**a zu erkennen.

Die Pressplatte **53** lässt sich mittels der in Pressrichtung **10** verlaufenden, in diesem Fall zwei, Kolbenstangen **55** in Pressrichtung **10** vorwärtsschieben, um das zwischen der Gegenplatte **52** und der Pressplatte **53,** im Presskanal **51,** liegende lose Material zu verdichten.

Je nach Bauart der Kasten-Ballenpresse kann die Pressplatte **53** bis in den Presskanal **51** hinein vorfahren, in der Regel bleibt sie jedoch in ihrer am weitesten vorgeschobenen Stellung an der rechten, vorderen Stirnfläche des Presskanals **51** stehen, wenn der Ballen B fertiggestellt ist.

Die Wände **51**a bis d bestehen aus auf der Außenseite durch Rippen verstärkten Stahlplatten, die auf der Innenseite, also zum Presskanal **51** hin, eine glatte Innenfläche aufweisen.

Wenn nun der Ballen B im Presskanal **51** fertiggestellt ist, wie in Figur **3**c dargestellt, soll vor dem Entnehmen dieses Ballens B aus der geschlossenen Presskammer dieser umreift werden, also in der Aufsicht betrachtet mit von jeweils einem den Ballen eng anliegend ringförmig umgebenden Umreifungsmaterial versehen werden, und zwar meist in mehreren Ebenen je einem Ring übereinander.

Diese Umreifung wird nach Fertigstellen des Ballens B in der Pressstellung der Pressplatte **53** nach dem letzten Hub - wie in Figur **3**c dargestellt - dadurch vollzogen, dass ein bereits auf Länge geschnittenes Zugelement **100,** in der Regel ein Draht, in einer in diesem Fall horizontalen Umreifungsebene **13**" - in der auch die erste, lotrecht zur Pressrichtung **10,** der Verlaufsrichtung oder Längsrichtung des Presskanals **51,** verlaufende erste Querrichtung **11** liegt -, wie in Figur **3**a, b eingezeichnet, um den im Presskanal **51** befindlichen Ballen B herumgeführt wird. Die zweite Querrichtung **11** verläuft lotrecht zu dieser Umreifungsebene **13".**

Zu diesem Zweck sind die aufrecht stehenden, sich gegenüberliegenden Seitenwände **51**a und **51**c von horizontal verlaufenden Schlitzen **54** von der Außenseite zu Innenseite durchdrungen, die sich über die gesamte Länge von der der Gegenplatte zugewandten Stirnseite bis zu oder nahe der gegenüberliegenden Pressseite, nämlich mindestens bis zu der Pressplatte **53** in deren Pressstellung, erstrecken, und in diesem Fall in ihrem der Pressplatte **53** zugewandten Endbereich vorzugsweise eine größere Breite als im weiteren Verlauf besitzen.

Dadurch ist es möglich, auf der Höhe eines der Schlitze **54** zwischen Ballen und der Pressfläche **53**a der Pressplatte **53** einen solchen Draht **100** von der Ausgangsseite des Presskanals **51,** an der sich die Blockiervorrichtungen **1** befinden, in Blickrichtung der Figur **3**c an der Stirnfläche des Ballens B vorbei zur gegenüberliegenden Seitenwand **51**c und den dortigen Schlitz **54** durch diese hindurch zu schieben, wofür in der Pressfläche **53**a der Pressplatte **53** vorzugsweise jeweils eine horizontal verlaufende Nut vorhanden ist.

Anschließend wird dieses vordere Ende **100**a des Drahtes **100** auf der Außenseite der von der Ausgangsseite abgewandten Seitenwand **51**c zum vorderen stirnseitigen Ende des Presskanals **51** geführt und dort entgegen der Blickrichtung der Figur **3**c zwischen dem Ballen B und der Verschluss-Fläche **52**a der Gegenplatte **52** - in der sich analoge Nuten wie in der Pressfläche **53**a befinden können - auf die in der Figur **3**c sichtbare Seitenwand **51**a, also zurück zur Ausgangsseite, geschoben.

Auf dieser Ausgangsseite wie in Figur **3**c betrachtet, stehen somit nach dem Durchfädeln die beiden Enden **100**a, b des auf Länge geschnittenen Zugelementes **100** vor, die vor dieser Ausgangsseite, also außerhalb dieser Seitenwand **51**a, miteinander verbunden werden müssen, um den endlosen Umreifungsring um den Ballen B zu schließen.

Da ja das Zugelement **100,** welches als Umreifungsmaterial dienen soll, mit möglichst geringem Übermaß auf Länge geschnitten ist, damit im geschlossenen Zustand das ringförmige Zugelement **100** das Aufweiten und Auseinanderfallen des Ballens B beschränkt, müssen zum Ineinanderhängen die Endbereiche **100**a und **100**b vom Bediener vor dieser Seitenwand **51**a mit erheblicher Kraft gegeneinander gezogen und mit ihren dafür ausgebildeten Endbereichen**100**a und **100**b, meist sogenannten Quicklink-Ösen, wie schematisch in Figur **2**b dargestellt, ineinander gehängt werden.

Um dies zu erleichtern, zieht der Bediener den am Pressplatten-Ende vorstehenden Endbereich **100**a so weit aus der Seitenwand **51**a hervor, dass er ihn in Pressrichtung **10** nach vorne, in Richtung Gegenplatte **52**, umlegen und mit seinem Endbereich, also knapp hinter dem Einhängebeschlag des Zugelementes**100**, in die Blockiervorrichtung **1** einhängen kann.

Dadurch ist das Zugelement **100** in Zugrichtung nach rechts, also in Blockier-Richtung **10',** gegen ein Herausziehen aus der Blockiervorrichtung **1** blockiert, während es in die andere Richtung, die Freilaufrichtung, hier die Pressrichtung **10,** problemlos weiter durch die Blockiervorrichtung **1** gezogen werden könnte.

Auf diese Art und Weise wird für den Bediener die Handhabung vereinfacht, da er nur noch den von links heranreichenden anderen Endbereich **100**b in Richtung Blockiervorrichtung **1** ziehen - wofür er nun beide Hände zur Verfügung hat - und an dem daraus in Pressrichtung **10** vorstehenden anderen Endbereich **100**a einhängen muss.

Dies wird auf jeder der in diesem Fall vier Umreifungsebenen **13"** hintereinander durchgeführt, wobei sich die Pressplatte **53** noch in der Pressstellung befindet, also den Ballen B in Pressrichtung **10** unter Spannung hält.

Sobald die Pressplatte **53** aus dieser Pressstellung zurückgezogen wird, dehnt sich der Ballen B entgegen der Pressrichtung **10** aufgrund seiner Eigenelastizität aus, wodurch die geschlossenen Umreifungsringe gespannt werden und sich eng an die Außenflächen des Ballens B anlegen, was möglich ist, da die beidseits über die Schlitze **54** hinausragenden Abschnitte des Zugelements **100** sich radial nach innen in Richtung Presskanal **51** durch diese Schlitze **54** hindurch bewegen und an der Außenfläche des Ballens B anliegen und sich dadurch innerhalb des Presskanals **51** befinden.

Nun kann die Gegenplatte **52** aus dem Querschnitt des Presskanals **51** entfernt und der Ballen B an dieser Stirnseite aus dem Presskanal **51** ausgeschoben werden, beispielsweise mithilfe der weiter vorschiebbaren Pressplatte **53.**

Wie zu diesem Zweck die Blockiervorrichtung **1** aufgebaut ist und funktioniert, ist am besten den Figuren **4**a bis c betreffend die fertigmontierte Blockiervorrichtung **1** sowie den Figuren **5**a, b, die die Blockiervorrichtung **1** in Explosionsdarstellung zeigen, zu entnehmen:
Kernstück der Blockiervorrichtung sind zwei mit ihren Mittenachsen **2**'a und **2**'b parallel beabstandet zueinander angeordnete Klemmzylinder **2**a, b als Klemmelemente, die zwischen ihren Umfangsflächen, ein zwischen sich eingelegtes längliches Objekt wie etwa ein Zugelement **100,** z.B. einen Bindedraht, bei Anlage zwischen den beiden Umfangsflächen an einer Bewegung in Blockier-Richtung **10' -** in den Figuren **4**a, b, **5**a die Richtung nach rechts - hindern kann, also blockieren kann. Die Umfangsflächen können aufgeraut, insbesondere mit einer Vielzahn-Profilierung versehen, sein. Die Blockier-Richtung **10'** liegt somit quer zu den parallel zueinander liegenden Mittenachsen **2**'a und **2**'b der beiden Klemmzylinder **2**a, b.

Die Klemmung kommt insbesondere dadurch zustande, dass der erste Klemmzylinder **2**a nicht drehbar um seine Mittenachse **2**'a an einer ersten Basis **5**a befestigt ist, während der zweite Klemmzylinder **2**b an einer zweiten Basis **5**a schwenkbar um eine Schwenkachse **9'** befestigt ist, die jedoch exzentrisch zu seiner Mittenachse **2**'b liegt, wie am besten in Figur **4**b zu erkennen.

Zwischen den Basen **5**a, b, die hier plattenförmig ausgebildet sind, befindet sich ein Durchlass **6,** der in Blickrichtung der Figur **4**b breiter ist als die Dicke des Zugelementes **100** und sich auf einer Höhe zwischen den beiden Klemmzylindern **2**a**,** b befindet, so dass ein in der Blockiervorrichtung **1** zwischen den Klemmzylindern **2**a, b eingelegtes Zugelement **100** bei entsprechender Kraftbeaufschlagung durch diesen Durchlass **6** und einen dahinter angeordneten Schlitz **54** in der Wand des Presskanals **51** hindurch den Ballen B erreichen kann.

Die Schwenkachse **9'** liegt in der Stirn-Ansicht des verschwenkbaren Klemmzylinders **2**b gemäß Figur **4**b vorzugsweise genau über der Mittenachse **2**'a des darunter befindlichen, fixen, nicht drehbaren Klemmzylinders **2**a, sodass die durch Schwenkachse **9'** und Mittenachse **2**'a aufgespannte Ebene genau lotrecht zur Richtung des zwischen den beiden Klemmzylindern **2**a, b durchgeführten Zugelementes **100** und/oder zur Blockier-Richtung **10'** liegt.

Der Abstand zwischen den beiden Mittenachsen **2**'a und **2**'b ist vorzugsweise kleiner als die Summe der Radien der beiden Klemmzylinder **2**a, b, wobei diese in der Regel den gleichen Radius besitzen, und in diesem Fall dann kleiner als der Durchmesser eines der Klemmzylinder **2**a oder **2**b.

Dadurch liegt bei fehlendem, zu blockierenden Zugelement **100** zwischen den beiden Klemmzylindern - wie in Figur **4**c dargestellt, der obere schwenkbare Klemmzylinder **2**b schwerkraftbedingt oder auch vorgespannt durch eine zum Beispiel um die Schwenkachse **9'** herum angeordnete, nicht sichtbare Feder **3** an der Mantelfläche des anderen, hier darunter befindlichen Klemmzylinders **2**a an, vorzugsweise von dessen obersten Punkt aus zu derjenigen Seite versetzt, auf der sich die Mittelachse **2**'b des schwenkbaren Klemmzylinders **2**b bezüglich der durch Schwenkachse **9'** und die Mittenachse **2**'a des anderen Klemmzylinders aufgespannten Ebene liegt.

Bei eingelegtem Draht **100** drücken die beiden Klemmzylinder **2**a, b in einer quer zur Drahtrichtung liegenden Klemmrichtung **14'** gegeneinander und gegen den Draht **100.**

Bei einem Zug am zwischen den Klemmzylindern **2**a, b eingelegten Zugelement **100,** welches dann tangential an den beiden Mantelflächen der Klemmzylinder **2** a, b anliegt, in Figur **4**b nach rechts, also in Blockier-Richtung **10',** versucht das Zugelement **100** durch die Reibung gegenüber den Mantelflächen den verschwenkbaren oberen Klemmzylinder **2**b um die Schwenkachse **9'** entgegen dem Uhrzeigersinn zu verschwenken, wodurch die Klemmung des Zugelementes **100** zwischen den beiden Klemmzylindern **2**a, b immer stärker wird.

Für die Funktion als Blockiervorrichtung **1** beim Umreifungsvorgang an einer Kasten-Ballenpresse **50** ist es wichtig, dass auch nach dem Schließen des Umreifungsringes, also des Verbindens der beiden Endbereiche **100**a**,** b des Zugelementes **100** gegeneinander, das Zugelement **100** in axialer Richtung der beiden Klemmzylinder **2**a, b in eine erste Richtung **11.1** der ersten Querrichtung **11,** nämlich in Richtung des Ballenkanals **51** und des darin befindlichen Ballens B, also in Blickrichtung der Figur **4**b, zwischen den beiden Klemmzylindern **2**a, b herausgezogen werden kann, was durch Spannen des Zugelementes **100** beim Ausdehnen des Ballens B entgegen der Pressrichtung **10** geschieht, wenn z.B. die Pressplatte **53** aus ihrer Pressstellung zurückgezogen wird.

Zu diesem Zweck darf am ballen-seitigen, inneren Ende der Klemmzylinder **2**a, b kein weiteres nach radial außen über die Klemmzylinder **2**a, b vorstehendes Element vorhanden sein.

Um ein Herausziehen in einer zweiten Richtung **11.2** entgegen der ersten Richtung **11.1,** also vom Presskanal **51** weg, zu verhindern, ist deshalb an der vorderen Stirnfläche - vorzugsweise des festmontierten - Klemmzylinders **2**a eine Anschlagplatte **4** montiert, die in Umfangsrichtung über den Umfang dieses unteren Klemmzylinders **2**a etwas vorsteht, jedoch nicht in Richtung der Mittenachse **2**'b des oberen, verschwenkbaren Klemmzylinders **2**b, sondern schräg nach oben vorne in Pressrichtung **10** abragend. In der Ruhestellung der beiden Klemmzylinder **2**a ,b, also ohne zu blockierendes Element dazwischen, wie in Figur **3**b und **4**c dargestellt, überdeckt die Anschlagplatte **4** gerade noch den äußersten Rand der Stirnfläche des anderen, des oberen, schwenkbaren Klemmzylinders **2**b.

Wenn dagegen ein Zugelement **100** wie etwa ein Draht zwischen den beiden Klemmzylindern **2**a, b eingelegt ist, wie in Figur **4**b dargestellt, muss in der Aufsicht auf die Klemmzylinder **2**a, b gemäß Figur **4**b der Rand der Anschlagplatte **4** den Rand der Stirnseite des anderen, insbesondere des oberen schwenkbaren Klemmzylinders **2**b nicht mehr erreichen, aber die zwischen der Wand der Anschlagplatte **4** und dem Rand des schwenkbaren Klemmzylinders **2**b gegebenenfalls bestehende Lücke muss kleiner sein als die in dieser Richtung betrachtete Dicke des Zugelementes **100,** um ein Herausrutschen entgegen der Blickrichtung der Figur **4**b, also vom Presskanal **51** weg, zuverlässig zu vermeiden.

Um die Herstellung und Montage der Blockiervorrichtung **1** zu vereinfachen, sind die Klemmzylinder **2**a, b identisch gestaltet und jeweils auf einer Basisplatte **5**a, b mit ihrer hinteren Stirnfläche befestigt:
Wie vor allem Figur **5**a erkennen lässt, besitzen beide Klemmzylinder **2**a, b eine im Wesentlichen sich über die gesamte axiale Erstreckung aufgebrachte Vielzahn-Profilierung in Umfangsrichtung über den gesamten Umfang, sowie bezüglich der Längsmitteachse **2**'a bzw. **2**'b gegenüberliegend je eine von einer Stirnseite zur anderen Stirnseite des Klemmzylinders **2**a, b durchgehende Durchgangsbohrung **8**a, b mit übereinstimmendem Durchmesser.

In der unteren Basisplatte **5**a, an der der nicht drehbare, in diesem Fall untere, Klemmzylinder **2**a befestigt werden soll, befinden sich im gleichen Abstand und mindestens mit dem gleichen Durchmesser wie die Durchgangsbohrungen **8**a, b ebenfalls Bohrungen, sodass jeweils ein Fixierstift **9**a, b durch die Durchgangsbohrung **8**a, b einerseits und die dazu fluchtende jeweilige Bohrung, insbesondere Durchgangsbohrung, in der Basisplatte **5**a einsteckbar und befestigbar ist, z.B. durch Verschweißen.

Im dargestellten Fall ist der Fixierstift **9**a, b in seinen Stirnflächen mit jeweils einer Gewindebohrung versehen, sodass vom freien Ende des Klemmzylinder **2a** her jeweils eine Befestigungsschraube eingeschraubt werden kann, nachdem zuvor noch die Anschlagplatte **4** dazwischen gesetzt wurde, die zwei zu den Durchgangsbohrungen **8**a, b passende und fluchtende Durchgangsbohrungen aufweist. Durch Einschrauben dieser beiden frontseitigen Befestigungsschrauben wird also die Anschlagplatte **4** an der vorderen Stirnfläche des feststehenden Klemmzylinders **2**a befestigt.

Dagegen ist in der oberen Basisplatte **5**b zur Befestigung des oberen Klemmzylinders **2**b nur eine Durchgangsbohrung vorhanden, und zwar wiederum gleich groß oder größer als der Durchmesser einer der beiden auch in diesem oberen Klemmzylinder **2**b vorhandenen Durchgangsbohrungen **8**a, b.

Bei diesem oberen schwenkbaren Klemmzylinder **2**b wird in analoger Weise - jedoch ist statt der Anschlagplatte **4** vorzugsweise nur ein Gleitring **7** zwischengelegt - mittels nur eines Fixierstiftes **9**a der schwenkbare Klemmzylinder **2**b an der ihn tragenden Basisplatte **5**b befestigt und ist um den Fixierstift **9**a herum schwenkbar, weshalb Gleitringe **7** mit guten Gleiteigenschaften an beiden Stirnseiten des Klemmzylinders **2**b einerseits zur frontseitigen Verschraubung und andererseits zur Basisplatte **5**b hin die Gleitreibung verringern.

### BEZUGSZEICHENLISTE

- 1: Blockiervorrichtung
- **2**a: festes Klemmelement, Klemmzylinder
- **2**b: bewegliches Klemmelement, Klemmzylinder
- **2**': Mittelachse
- 3: Feder
- 4: Anschlagelement, Anschlagplatte
- **5**a, b: Basis, Basisplatte
- 6: Durchlass
- **7**: Gleitring
- **8**a, b: Durchgangsbohrung
- **9**': Schwenkachse
- **9**a, b: Fixierstift
- **10**: Pressrichtung
- **10**': Blockier-Richtung
- **11**: erste Querrichtung (in Umreifungsebene)
- **11.1**: erste Richtung
- **11.2**: zweite Richtung
- **12**: zweite Querrichtung
- **13"**: Umreifungsebene
- **14'**: Klemm-Richtung

- **50**: Kasten-Ballenpresse
- **51**: Presskanal
- **51**a - d: Wand
- **51**a: Ausgangsseite
- **52**: Gegenplatte
- **52**a: Verschlussfläche, Kontaktfläche
- **53**: Pressplatte
- **53**a: Pressfläche
- **54**: Schlitz
- **55**: Kolbenstange

- **100**: Zugelement, Draht
- **100**a, b: Endbereich

- B: Ballen

## Patentansprüche

1. Blockiervorrichtung **(1)** zum Blockieren eines in die Blockiervorrichtung **(1)** eingelegten Zugelementes **(100),** insbesondere eines Drahtes **(100),** bei Bewegung in einer Blockier-Richtung **(10'),**
**dadurch gekennzeichnet, dass**
die Blockiervorrichtung **(1)** so ausgelegt ist, dass das eingelegte Zugelement **(100)** in wenigstens einer ersten Querrichtung **(11)** zur Blockier-Richtung **(10')** gegenüber der Blockiervorrichtung **(1)** beweglich, insbesondere aus der Blockiervorrichtung **(1)** entnehmbar, ist.

2. Blockiervorrichtung nach Anspruch **1,**
**dadurch gekennzeichnet, dass**
- die Blockiervorrichtung **(1)** so ausgelegt ist, dass das darin eingelegte Zugelement **(100)** entgegen der Blockierrichtung **(10')** gegenüber der Blockiervorrichtung **(1)** beweglich ist, insbesondere unter Aufrechterhaltung der Blockierung in Blockiererrichtung **(10)**
und/oder
- die Blockiervorrichtung **(1)** so ausgelegt ist, dass das eingelegte Zugelement **(100)** in der ersten Querrichtung **(11)** nur in eine erste Richtung **(11.1)** dieser Querrichtung **(11)** aus der Blockiervorrichtung **(1)** entnehmbar ist, insbesondere durch Herausziehen in dieser ersten Querrichtung **(11.1).**

3. Blockiervorrichtung nach einem der vorhergehenden Ansprüche,
**dadurch gekennzeichnet, dass**
- die Blockiervorrichtung **(1)** eine Klemmvorrichtung ist mit zwei Klemmelementen (**2**a, b), die eine Klemmkraft jeweils in Klemm-Richtung **(14')** des anderen Klemmelementes ausüben und damit auch auf ein dazwischen eingelegtes Zugelement **(100),** und
- insbesondere die Klemmelementen (**2**a, b) so ausgebildet und angeordnet sind, dass der zwischen ihnen vorhandene Abstand variabel ist, insbesondere indem die Klemmfläche des einen Klemmelementes (**2**a) unbeweglich ist und die Klemmfläche des anderen Klemmelementes (**2**b) verlagerbar, insbesondere verschwenkbar, relativ zur ersten Klemmfläche ist und/oder
- das bewegliche Klemmelement (**2**b) in die Klemmrichtung **(14')** vorgespannt ist, insbesondere mittels einer Feder **(3).**

4. Blockiervorrichtung nach einem der vorhergehenden Ansprüche,
**dadurch gekennzeichnet, dass**
- die Klemmelemente Klemm-Zylinder (**2**a, b) sind, deren Mittel-Achsen **(2')** parallel zueinander verlaufen und von denen der eine Klemmzylinder (**2**a) verschwenkbar um eine exzentrisch zu seiner Mittelachse verlaufende Schwenkachse **(9')** ist
und/oder
- die Blockiervorrichtung **(1)** ein Anschlagelement **(4),** insbesondere eine Anschlagplatte **(4),** umfasst, die insbesondere an einem der beiden Klemm-Elemente, insbesondere dem feststehenden (**2**a), insbesondere dem feststehenden Klemmzylinder (**2**a) stirnseitig, befestigt ist und sich über den Abstand bzw. den Kontaktbereich zwischen den beiden Klemmelementen (**2**a, b) hinweg erstreckt..

5. Blockiervorrichtung nach einem der vorhergehenden Ansprüche,
**dadurch gekennzeichnet, dass**
die beiden Klemm-Elemente (**2**a, b) auf je einer Basis, insbesondere Basisplatte (**5**a b), befestigt sind und insbesondere
- im Montagezustand die beiden Basen, insbesondere Basisplatten (**5**a, b) miteinander verbunden sind, insbesondere einstückig miteinander verbunden sind, insbesondere über wenigstens einen Steg
und/oder
- im Benutzungszustand der Blockiervorrichtung **(1)** zwischen dem beiden Basen (**5**a, b), insbesondere Basisplatten (**5**a, b), ein ausreichend großer Durchlass **(6)** vorhanden ist, der größer ist als die Dicke des zu blockierenden Zugelementes **(100)** im eingelegten Zustand in dieser Richtung, und/oder
- jeder Klemmzylinder (**2**a, b) einander gegenüberliegend und insbesondere symmetrisch zu seiner Mittelachse **(2')** zwei axial Durchgangsbohrungen (**8**a, b) aufweist, die insbesondere den gleichen Durchmesser besitzen.

6. Blockiervorrichtung nach einem der vorhergehenden Ansprüche,
**dadurch gekennzeichnet, dass**
- beim fest montierten Klemmzylinder (**2**a) sich je ein Fixierstift (**9**a, b) durch je eine der Durchgangsbohrungen (**8**a,b) hindurch erstreckt und mit einem Ende in der Basis (**5**a, b) befestigt ist und am anderen Ende einen verdickten Kopf aufweist, der einen größeren Durchmesser als die Durchgangsbohrung (**8**a, b) besitzt,
und/oder
- beim beweglichen, insbesondere verschwenkbaren, Klemmzylinder (**2**b) sich durch eine seiner Durchgangsbohrungen (**8**a) ein Fixierstift (**9**a) hindurch erstreckt, der gegenüber der Durchgangsbohrung ausreichend radiales Spiel besitzt, sodass dieser Klemmzylinder (**2**a) um diesen Fixierstift (**9**a) als Schwenkachse **(9')** schwenken kann.

7. Blockiervorrichtung nach einem der vorhergehenden Ansprüche,
**dadurch gekennzeichnet, dass**
die Schwenkachse **(9')** insbesondere in Form der einen Durchgangsbohrung (**8**a) des schwenkbaren Klemmzylinders (**2**b) in einem solchen Abstand zum anderen Klemmzylinder (**2**a) angeordnet ist, dass der beim Verschwenken geringste erzielbare Abstand zwischen den Klemmzylindern kleiner ist als die Dicke des dazwischen gelegten, zu blockierenden Zugelementes, insbesondere die Dicke des dazwischen zu blockierenden Drahtes **(100).**

8. Blockiervorrichtung nach einem der vorhergehenden Ansprüche,
**dadurch gekennzeichnet, dass**
- die Klemmelemente (**2**a, b), insbesondere Klemmzylinder (**2**a, b), mit ihrer Axialrichtung abweichend von der Vertikalen, insbesondere horizontal verlaufend angeordnet sind,
- die Mittelachse **(2')** des schwenkbaren Klemmelementes (**2**b) oberhalb, insbesondere über, der Mittelachse **(2')** des fixierten Klemmelementes (**2**a) angeordnet ist,
- die Klemmelemente (**2**a, b) so angeordnet sind, dass sich ihre Klemmflächen gegenseitig kontaktieren können.

9. Kasten-Ballenpresse **(50)** mit
- einem von Kanalwänden (**51**a - d) umgebenen Presskanal **(51),**
- einer in dem Presskanal **(51)** verfahrbaren Pressplatte **(53),**
- in Pressrichtung **(10)** verlaufenden Schlitzen **(54)** in je zwei einander gegenüberliegenden Wänden (**51**a, **51**c),
- einem die andere Stirnseite des Presskanals **(51)** verschließenden, zu öffnenden, Gegen-Platte **(52),**
**dadurch gekennzeichnet, dass**
auf der Außenseite einer dieser beiden einander gegenüberliegenden Seitenwände (**51**a, c) an wenigstens einem der Schlitze **(54),** insbesondere an allen Schlitzen **(54)** dieser Wand (z.B. **51**a) eine Blockiervorrichtung **(1)** nach einem der vorhergehenden Ansprüche angeordnet ist.

10. Kasten-Ballenpresse nach Anspruch 9,
**dadurch gekennzeichnet, dass**
die Blockiervorrichtung **(1)** so angeordnet ist, dass deren Blockier-Richtung **(10')** gegen die Press-Richtung **(10)** gerichtet ist.

11. Kasten- Ballenpresse nach Anspruch **8** oder **9,**
**dadurch gekennzeichnet, dass**
die Schlitze **(54)** eine Breite aufweisen, die größer ist als die kleinste, insbesondere die größte, Quererstreckung des in die Blockiervorrichtungen **(1)** jeweils einzulegenden Zugelementes **(100),** insbesondere eines Drahtes **(100).**

12. Kasten- Ballenpresse nach einem der Ansprüche **9 bis11,**
**dadurch gekennzeichnet, dass**
der Abstands-Kanal zwischen den Basen (**5**a, b) bzw. Basisplatten a, b), mit dem Schlitz **(54)** fluchtend verläuft und insbesondere mindestens so breit ist

13. Kasten- Ballenpresse nach einem der Ansprüche **9** bis **12,**
**dadurch gekennzeichnet, dass**
- die Blockiervorrichtung **(1)** quer zur Pressrichtung **(10)** betrachtet von der geschlossenen Gegenplatte **(52)** um mindestens **50** %, besser mindestens **60** %, besser mindestens **70** % der Länge der vollständig gefüllte Presskammer von der Gegenplatte **(52)** entfernt angeordnet ist
und/oder
- die Blockier-Vorrichtungen **(1)** in Pressrichtung **(10')** auf der gleichen Längsposition angeordnet sind.

14. Kasten- Ballenpresse nach einem der Ansprüche **9** bis **13,**
**dadurch gekennzeichnet, dass**
in der Pressplatte **(53)** und/oder der Gegenplatte **(52)** Nuten **(56)** so angeordnet sind, dass sie mit den Enden zweier gegenüberliegender Schlitze **(54)** fluchten, und die Nuten **(56)** vorzugsweise horizontal verlaufen.

15. Verfahren zum Umreifen eines in einer Kasten-Ballenpresse **(50)** hergestellten Ballens (B) mittels vor Beginn des Umreifungsvorganges auf Länge konfektionierten Zugelementen **(100),** insbesondere Drähten **(100),** wobei nach Fertigstellung des Ballens (B) in der geschlossenen Presskammer **(51)**
a) die Pressplatte **(53)** in der Pressstellung belassen wird,
b) das Zugelement **(100),** insbesondere der Draht **(100),** von einer Ausgangs-Seite in einer ersten, meist horizontalen, Querrichtung **(11)** entlang der Frontseite der Pressplatte **(53)** geführt, durch die entlang des anschließenden Schlitzes **(54)** in der Wand und zur Frontseite der Gegenplatte **(52)** und von dort in Querrichtung **(11)** zurückgeführt auf die Ausgangs-Seite geführt wird,
c) die beiden auf der Ausgangsseite aus dem Schlitz **(54)** vorstehenden Enden **(100** a, b) des Zugelementes **(100)** einerseits in und andererseits entgegen der Pressrichtung **(10)** der verfahrbaren Pressplatte **(53)** gegeneinander angenähert und
d) miteinander verbunden werden,
e) die Gegenplatte **(52)** geöffnet und/oder die Pressplatte **(53)** entgegen der Pressrichtung **(10)** zurückgezogen wird,
f) der fertig hergestellte Ballen (B) aus der Presskammer **(51)** entnommen wird,
**dadurch gekennzeichnet**, das vor Schritt d) der erste **(100**a**)** der beiden Endbereiche des Zugelementes **(100)** in eine Blockiervorrichtung **(1)** für das Zugelement **(100)** eingehängt wird, dass das freie Ende dieses Endbereiches von der Blockiervorrichtung **(1)** vorzugsweise in Pressrichtung **(10)** weist und die Blockiervorrichtung **(1)** in Gegenrichtung, also in Blockierrichtung, das Zugelement **(100)** blockiert,
- nur der zweite **(100**b**)** der beiden Endbereiche ergriffen und in Richtung des ersten Endbereiches **(100**a**)** so weit herangezogen wird, dass
- er mit diesem ersten Endbereiche **(100**a**)** verbunden werden kann und
- mit diesem verbunden wird.

16. Verfahren nach Anspruch **15,**
**dadurch gekennzeichnet, dass**
das Einlegen des ersten Endbereiches **(100**a**)** erfolgt, indem
- das bewegliche Klemmelement **(2**a**)** der Blockiervorrichtung **(1)** in die Offenstellung bewegt wird,
- das Zugelement **(100)** nahe seines ersten Endbereiches **(100a)** zwischen die beiden Klemmelement (**2**a, b) eingelegt wird und
- das bewegliche Klemmelement **(2**a**)** in die Klemmstellung, in der es am Zugelement **(100)** anliegt und insbesondere bereits klemmt, bewegt wird.
